Europäisches Patentamt

(19) European Patent Office                    (11) Publication number:                 **0 184 219**

Office européen des brevets                                                    **B1**

(12)                              **EUROPEAN PATENT SPECIFICATION**

(45) Date of publication of patent specification: **08.11.89**    (51) Int. Cl.⁴: **G 21 C 19/30**

(21) Application number: **85115564.8**

(22) Date of filing: **06.12.85**

(54) Debris trap for a nuclear fuel assembly.

(30) Priority: **07.12.84 US 679511**

(43) Date of publication of application:
**11.06.86 Bulletin 86/24**

(45) Publication of the grant of the patent:
**08.11.89 Bulletin 89/45**

(84) Designated Contracting States:
**BE DE FR GB IT SE**

(56) References cited:
**DE-A-2 517 479**
**FR-A-1 479 148**
**FR-A-2 393 402**
**US-A-2 087 385**

(73) Proprietor: **WESTINGHOUSE ELECTRIC CORPORATION**
**Westinghouse Building Gateway Center**
**Pittsburgh Pennsylvania 15222 (US)**

(72) Inventor: **Bryan, William Jaye**
**232 Sunrise Drive R.D. 2**
**Irwin Pennsylvania 15642 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Courier Press, Leamington Spa, England.

## Description

The present invention relates generally to nuclear reactors and, more particularly, to a debris trap for the bottom nozzle of a nuclear fuel assembly.

During manufacture and subsequent installation and repair of components of a nuclear reactor, a diligent effort is made to assure removal of all debris from the reactor vessel and its coolant circulation system. Although elaborate procedures are carried out in an endeavour to assure complete debris removal, experience shows that in spite of the safeguards used in this respect, some chips and metal particles can still remain in the system.

Thus, fuel assembly damage due to debris trapped at the bottom grid has been noted in several reactors in recent years. The damage consists in fuel-rod tube perforations caused by fretting of debris against the inner walls of the tubes. The debris tends to consist of relatively thin pieces of irregular shapes, most of which are metal turnings left in the primary system after steam generator repair or replacement. The debris lodges in the region of the lowermost grid of each fuel assembly, staying within the spaces between the "egg-crate" shaped cell walls of the grid and the lower ends of the fuel-rod tubes. Almost all of the debris is deposited just above the coolant-flow openings formed in the lower core support plate. U.S. Patent Specification No. 4,096,032 and FR—A—2,393,402 describe some ways and means for removing debris from nuclear reactors.

It is the principal object of the invention to provide a debris trap which itself is simple and relatively inexpensive, and which, once installed, can remain in place until a subsequent refueling or similar operation.

The invention accordingly resides in a debris trap in or for a nuclear fuel assembly having an end nozzle adapted for liquid coolant flow therethrough and into the fuel assembly, said debris trap being mounted or adapted to be mounted, respectively, in said end nozzle such as to extend across the coolant flow path therethrough characterised in that said debris trap comprises a hollow enclosure having an upstream wall and a downstream wall which are spaced apart to define a debris capturing and retaining chamber therebetween, and which walls are formed of a material permeable to the liquid coolant and impermeable to debris entrained therein, said upstream wall having therein at least one opening sufficiently large to allow said debris to pass therethrough, and having thereon baffling means associated with said or the respective opening and so disposed with respect thereto as to direct the debris through the opening into, and to deter passage of the debris through the opening from said debris capturing and retaining chamber.

The hollow enclosure is adapted to fit within the lower end nozzle of an existing fuel assembly without modification thereof, with the trap positioned between the adapter plate of the lower end nozzle and the upper surface of the lower core support plate such that each coolant flow passage in the support plate has an opening in the upstream wall of the debris trap aligned and in fluid-flow communication therewith. The baffle means associated with each opening in the upstream wall of the trap will direct debris in the coolant through the opening and into the capturing and retaining chamber but will not allow the debris to leave the chamber again. Thus, the debris is retained within the trap until the latter can be removed from the fuel assembly at the next refueling operation.

A preferred embodiment of the invention will now be described, by way of example only, with reference to the accompanying drawings, in which:

Figure 1 is an elevational view, shown partly in section and in vertically foreshortened form, of a fuel assembly provided with a debris trap embodying the invention;

Figure 2 is an enlarged top plan view of the debris trap, as taken along line 2—2 of Figure 1; and ·

Figure 3 is an enlarged fragmentary view of the debris trap enclosure, partly in section, as taken along line 3—3 of Figure 2.

In the following description, like reference characters designate like or corresponding parts throughout the several views of the drawings, and terms such as "forward", "rearward", "left", "right", "upwardly", "downwardly", and the like are employed as words of convenience not to be construed as limiting terms.

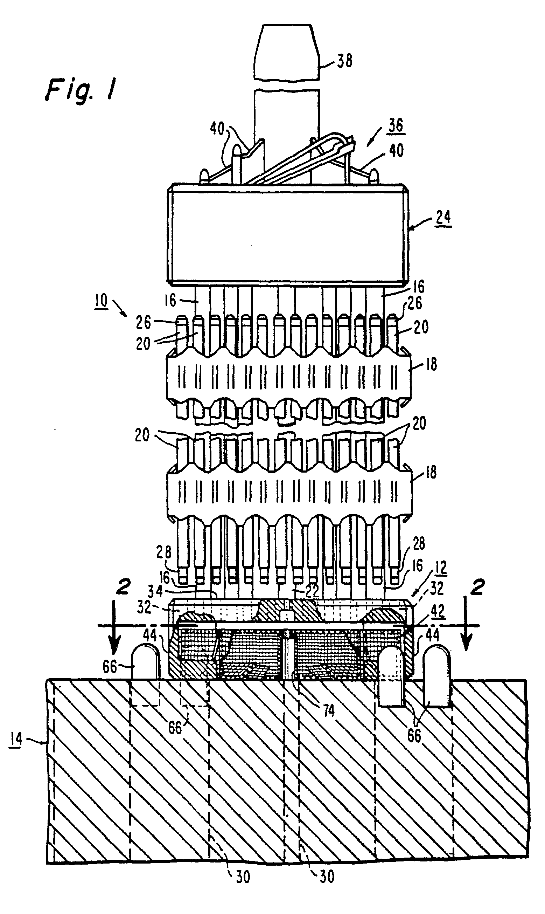

Referring now to the drawings, and particularly to Figure 1, the nuclear fuel assembly illustrated therein and generally designated with the numeral 10 is the type used in pressurized water reactors. Basically, it includes a lower end structure or bottom nozzle 12 for supporting the assembly on a lower core support plate 14 in the core region of a reactor (not shown), a number of guide tubes or thimbles 16 longitudinally extending upward from the bottom nozzle 12, a plurality of transverse grids 18 axially spaced along the guide thimbles 16, an organized array of elongate fuel rods 20 transversely spaced and supported by the grids 18, an instrumentation tube 22 located in the center of the fuel assembly, and an upper end structure or top nozzle 24 attached to the upper ends of the guide thimbles 16. This fuel assembly 10 forms an integral unit capable of being conveniently handled without damage to its parts.

Each of the fuel rods 20 contains nuclear fuel pellets (not shown) composed of fissile material, and is sealed at its opposite ends by means of end plugs 26, 28. A liquid moderator/coolant, such as water, or water containing boron, is pumped upwardly through flow openings 30 in the lower core plate 14, through flow holes 32 in an upper adapter plate 34 of the bottom nozzle 12, and through the guide thimbles 16 and the spaces between the fuel rods 20 in order to extract heat from the fuel assembly for use in producing useful work.

In order to control the fission process, a plurality of control rods (not shown) are reciprocally movable in the guide thimbles 16 which latter are at predetermined locations within the fuel assembly 10. Specifically, the control rods are operated by means of a rod-cluster control mechanism 36 disposed in the top nozzle 24 and having an internally threaded cylindrical operating member 38 with a plurality of radially extending flukes or arms 40, each of which is connected to one of the control rods, as well known in the art.

Debris trap mounted in bottom nozzle

As mentioned above, fuel assembly damage due to debris trapped at the lowermost one of the grids has been noticed in recent years. In order to prevent such damage it is highly desirable to trap and remove debris before it reaches the lowermost grid 18.

The debris trap embodying the invention, generally designated with numeral 42, is shown in Figure 1 as mounted within the bottom nozzle 12 adjacent and below the upper adapter plate 34 and between the corner legs 44 of the bottom nozzle. The trap 42 is positioned across the path of coolant flow from the openings of the lower core plate 14 to the holes 32 in the adapter plate 34 so as to capture debris, such as loose particles and pieces, from the flowing coolant and thereby prevent it from entering the fuel assembly 10. The captured debris is retained within the trap 42 to be removed therefrom upon subsequent removal of the fuel assembly 10 at the next refueling operation.

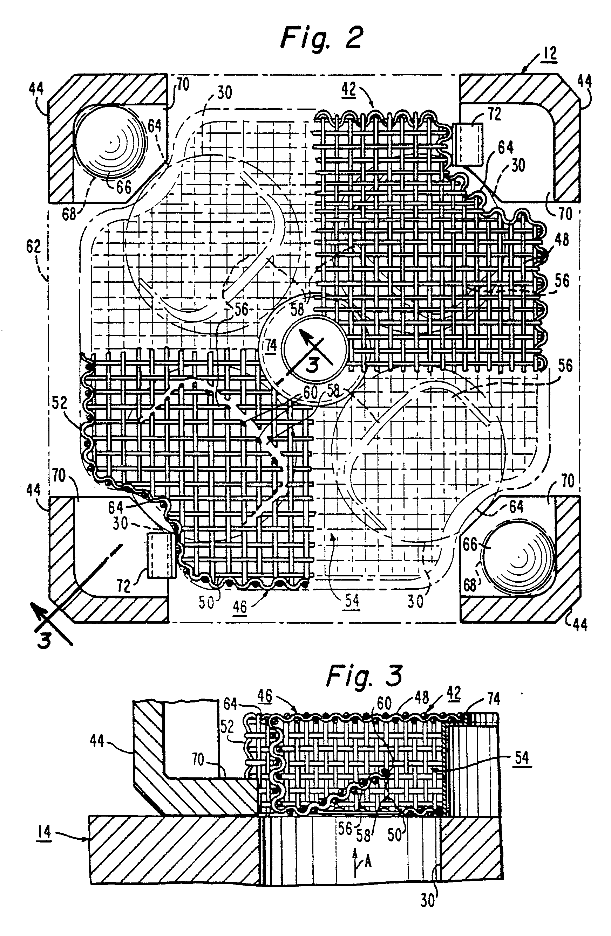

Referring now to Figures 2 and 3, the debris trap 42 comprises a hollow enclosure 46 having upper and lower walls 48, 50 and a continuous side wall 52 which interconnects the upper and lower walls at their outer peripheries and spaces them apart so as to define within the enclosure 46 a debris capturing and retaining chamber generally designated 54. At least the walls 48 and 50 of the enclosure 46 are composed of a suitable material permeable to the liquid coolant but impermeable to debris entrained therein. In the illustrated embodiment, all of the walls 48, 50, 52 are composed of a wire-mesh material in screen or layer form.

The lower or upstream wall 50 of the hollow enclosure 46 is provided with baffling means in the form of flap-like wall sections 56, and a plurality of openings 58 which allow debris etrained in the coolant exiting from the openings 30 in the lower core plate 14 to enter the trap chamber 54. In the illustrated embodiment, each of the wall sections 56 is a portion of the lower wall 50 which has been partially severed therefrom and then bent inwardly into the chamber 54 so as to extend at an acute angle, for instance thirty degrees, with respect to the remainder of the lower wall 50. The partially severed wall sections 56, which by being bent out of the plane of the bottom wall 50 form the openings 58, are matched in number and alignment with the coolant flow openings 30 in the lower core plate 14 so that each opening 30 in the lower core plate has one of the openings 58 into the trap enclosure chamber 54 placed directly above it.

The angle at which each wall section 56 is stationarily disposed relative to the plane of the lower wall 50 places the wall section 56 in a generally transverse and inclined position across the coolant-flow path, as indicated by arrow A in Figure 3, from the associated core-plate opening 30 and through the trap enclosure 46. Because of such positional relationship of each wall section 56 with respect to the remainder of the lower wall 50, the associated entry opening 58 defined between the generally U-shaped, unattached inner edge 60 of the wall section 56 and the adjacent edge portions of the lower wall 50 from which the section 56 was severed lies in planes extending generally parallel to the direction of coolant flow through the hollow enclosure 46. Thus, in order for debris carried by the coolant flow to enter the debris capturing and retaining chamber 54, the debris must impact one of the wall sections 56 to be deflected thereby laterally through the associated opening 58. Once the debris has entered the chamber 54, it is trapped therein due to the parallel orientation of the openings 58 with respect to the coolant flow path, which will substantially deter the debris from exiting back through any of the openings 58, and to the presence of the upper enclosure wall 48 against which flowing coolant will tend to press the debris.

Parenthetically, it will be noticed that the inner edge 60 of each wall section 56 is U-shaped and thereby is made up of multiple edge portions. Thus, the opening 58 defined between such multiple portions of the inner edge 60 and the adjacent portions of the remainder of the lower wall 48 lies in multiple planes all of which extend parallel to the direction A of coolant flow through the hollow enclosure 46.

As seen in Figures 1 and 2, the debris trap enclosure 46 has overall cross-sectional dimensions allowing the enclosure to be fit within the peripheral skirt 62 between the corner legs of the bottom nozzle 12 such that the trap enclosure will extend generally coplanar with the adapter plate 34 of the nozzle. Generally arcuate depressions 64 are formed in the corners of the enclosure 46. One diagonal pair of the depressions 64 provides space for a diagonal pair of alignment pins 66 which extend upright from the lower core plate 14 and fit through openings 68 in flanges 70 of a diagonal pair of the corner legs 44. The other diagonal pair of the depressions 64 provides space for means in the form of a pair of leaf springs 72 disposed in the depressions 64 and anchored to the trap enclosure 46 to engage the flanges 70 of the other diagonal pair of corner legs 44 in a manner such as to lock the enclosure 46 in position within the bottom nozzle 12 when the trap 42 is installed therein. Preferably, in the installed position of the trap 42, the upper wall 48 of its enclosure 46 is spaced a short distance below the adapter plate 34 in order that coolant flow through the holes 32 of the adapter plate is not obstructed.

The trap 42 is installed from the bottom of the fuel assembly 10 while the assembly is outside the reactor core. During installation, the leaf springs 72 are resiliently deflected inward as they engage the bottom flanges 70 of the nozzle legs 44 upon insertion of the trap 42 into the bottom nozzle 12, and then, when they have cleared the top of the flanges 70, they snap back to overlie the latter, whereupon the trap 42 is locked in place.

The hollow enclosure 46 of the debris trap 42 also has a central annular sleeve 74 which extends between the upper and lower walls 48, 50 and serves two purposes. First, the sleeve 74 which rests on the lower core plate 14 serves to increase the structural integrity of the hollow enclosure 46, and second, it allows access to where the lower end of the instrumentation tube 22 is attached to the adapter plate 34 of the bottom nozzle.

**Claims**

1. A debris trap (42) in or for a nuclear fuel assembly (10) having an end nozzle (12) adapted for liquid coolant flow therethrough and into the fuel assembly, said debris trap (42) being mounted or adapted to be mounted, respectively, in said end nozzle (12) such as to extend across the coolant flow path therethrough, characterised in that said debris trap (42) comprises a hollow enclosure (46) having an upstream wall (50) and a downstream wall (48) which are spaced apart to define a debris capturing and retaining chamber (54) therebetween, and which walls (48, 50) are formed of a material permeable to the liquid coolant and impermeable to debris entrained therein, said upstream wall (50) having therein at least one opening (58) sufficiently large to allow said debris to pass therethrough, and having thereon baffling means (56) associated with said or the respective opening (58) and so disposed with respect thereto as to direct the debris through the opening (58) into, and to deter passage of the debris through the opening (58) from, said debris capturing and retaining chamber (54).

2. A debris trap according to Claim 1, characterized in that said enclosure (46) includes a side wall (52) which joins said downstream and upstream walls (48, 50) peripherally to each other.

3. A debris trap according to Claim 2, characterized in that said side wall (52) is made of said material which is permeable to the liquid coolant and impermeable to debris entrained therein.

4. A debris trap according to Claim 1, 2 or 3, characterized in that said material is wire-mesh screen.

5. A debris trap according to Claim 1, 2, 3 or 4, characterized in that the baffling means (56) associated with said or the respective opening (58) is a member extending from said upstream wall (50) inwards of the debris capturing and retaining chamber (54) at an acute angle with respect to the plane of the upstream wall.

6. A debris trap according to Claim 5, characterized in that said member (56) is a flap-like section partially severed from the upstream wall (50) and angled out of its plane so as to displace a free edge (60) of the flap-like section from adjacent edge portions of the upstream wall and thereby define said opening (58) therebetween along planes substantially parallel to the direction of coolant flow through the hollow enclosure (46), said flap-like section (56) directing debris through said opening in a direction transverse to said direction of coolant flow.

7. A debris trap according to any one of the preceding claims, characterized in that said hollow enclosure (46) has a cross-sectional dimension and shape such as to fit within said end nozzle (12), and has disposed thereon locking means (72) for releasably locking the debris trap in position within the end nozzle (12).

8. A debris trap according to Claim 7, characterized in that said locking means (72) comprise leaf springs (72) disposed on opposite sides of said enclosure (46) and engageable with portions of said end nozzle (12) upon installation of the enclosure therein.

9. A debris trap according to any one of the preceding claims, characterized in that said hollow enclosure (46) includes a central annular sleeve (74) connected to and extending between said downstream and upstream walls (48, 50) so as to increase the structural integrity of the hollow enclosure.

**Patentansprüche**

1. Teilchenabscheider (42) in oder für ein Kernbrennelement (10) mit einem Endstück (12), durch welches Kühlflüssigkeit hindurch und in das Brennelement einströmt, wobei der Teilchenabscheider (42) in den Endstück (12) derart montiert bzw. montierbar ist, daß er sich im Kühlflüssigkeitsströmungsweg durch das Endstück befindet, dadurch gekennzeichnet, daß der Teilchenabscheider (42) eine hohle Umfassung (46) mit einer stromaufwärtigen Wand (50) und einer stromabwärtigen Wand (48) aufweist, die einen Abstand voneinander haben und zwischen sich eine Teilchen einfangende und zurückhaltende Kammer (54) bilden, und die aus für die Kühlflüssigkeit durchlässigem und für die darin mitgeführten Teilchen undurchlässigem Material sind, und daß die stromaufwärtige Wand (50) mindestens eine für den Durchtritt der Teilchen ausreichend große Öffnung aufweist und mit einem dieser Öffnung (58) zugeordneten und bezüglich derselben so angeordneten Ablenkorgan (56) versehen ist, daß die Teilchen zwar durch die Öffnung (58) in die Teilchen einfangende und zurückhaltende Kammer (54) eingeleitet werden, ein Durchtritt durch die Öffnung (58) aus der Kammer aber behindert wird.

2. Teilchenabscheider nach Anspruch 1, dadurch gekennzeichnet, daß die Umfassung (46) eine Seitenwand (52) aufweist, welche die stromabwärtige Wand und die stromaufwärtige Wand (48, 50) an ihrem Umfang miteinander verbindet.

3. Teilchenabscheider nach Anspruch 2, dadurch gekennzeichnet, daß die Seitenwand (52) ebenfalls aus dem für die Kühlflüssigkeit durchlässigen und für die darin mitgeführten teilchenundurchlässigen Material besteht.

4. Teilchenabscheider nach Anspruch 1, 2 oder 3, dadurch gekennzeichnet, daß das genannte Material ein Sieb aus Drahtgeflecht ist.

5. Teilchenabscheider nach Anspruch 1, 2, 3 oder 4, dadurch gekennzeichnet, daß das der bzw. jeder Öffnung (58) zugeordnete Ablenkorgan (56) ein von der stromaufwärtigen Wand (50) in die Teilchen einfangende und zurückhaltende Kammer (54) unter einem spitzem Winkel mit Bezug auf die Ebene der stromabwärtigen Wand hineinverlaufendes Bauteil ist.

6. Teilchenabscheider nach Anspruch 5, dadurch gekennzeichnet, daß das genannte Bauteil (56) ein aus der stromaufwärtigen Wand (50) teilweise ausgestanzter klappenartiger und aus der Wandebene herausgebogener Abschnitt ist, derart, daß sein freier Rand von den entsprechenden Randbereichen der stromaufwärtigen Wand versetzt ist und dadurch dazwischen die genannte Öffnung (58) entlang Ebenen gebildet ist, die im wesentlichen paralell zur Strömungsrichtung der Kühlflüssigkeit durch die hohle Umfassung (46) verlaufen, so daß der klappenartige Abschnitt (56) Teilchen in einer quer zur Kühlflüssigkeitsströmungsrichtung verlaufenden Richtung durch die Öffnung leitet.

7. Teilchenabscheider nach einem der vorhergehenden Ansprüche, dadurch gekennzeichnet, daß die hohle Umfassung (46) eine solche Querschnittabmessung und Form hat, daß sie in das genannte Endstück (12) hineinpaßt, und it Arretierungsmitteln (72) zur lösbaren Arretierung des Teilchenabscheiders in seiner Lage innerhalb des Endstücks (12) versehen ist.

8. Teilchenabscheider nach Anspruch 7, dadurch gekennzeichnet, daß die Arretierungsmittel (72) Blattfedern aufweisen, die beiderseits der Umfassung (46) angeordnet und beim Einsetzen der Umfassung in das Endstück (12) mit Gegenelementen derselben in Eingriff bringbar sind.

9. Teilchenabscheider nach einem der vorhergehenden Ansprüche, dadurch gekennzeichnet, daß die hohle Umfassung (46) eine mittige ringförmige Hülse (74) aufweist, die zwischen der stromabwärtigen Wand und der stromaufwärtigen Wand (48, 50) verläuft und mit diesen verbunden ist, um die mechanische Integrität der hohlen Umfassung zu verbessern.

## Revendications

1. Piège (42) de débris dans ou pour un assemblage combustible nucléaire (10), ayant un embout (12) d'extrémité adapté de façon que le liquide réfrigérant puisse le traverse et s'écouler dans l'assemblage combustible, ledit piège (42) à débris étant monté ou adapté pour être monté respectivement dans ledit embout (12) d'extrémité, de façon à s'étendre à travers le trajet du flux réfrigérant, caractérisé par le fait que ledit piège (42) de débris comprend une enceinte creuse (46) ayant une paroi amont (50) et une paroi aval (48), séparées l'une de l'autre pour définir entre elles une chambre (54) de capture et de retenue de débris, et dont les parois (48, 50) sont formées d'un matérieu perméable au liquide réfrigérant et imperméable aux débris entraînés à l'intérieur, ladite paroi amont (50) ayant en son intérieur au moins une ouverture (58) suffisamment grande pour permettre aux débris de passer à traverse cette ouverture, et ayant à cet endroit des moyens déflecteurs (56) associés à ladite ouverture ou l'ouverture respective (58) et disposés de façon à diriger les débris à travers l'ouverture (58) vers l'intérieur de la chambre (54) de capture et de retenue de débris, et d'empêcher le passage des débris à travers l'ouverture (58) vers l'extérieur de la chambre (54) de capture et de retenue de débris.

2. Piège de débris selon la revendication 1, caractérisé par le fait que ladite enceinte (46) comporte une paroi latérale (52) qui relie lesdites parois aval et amont (48, 50), d'une façon périphérique, l'une à l'autre.

3. Piège de débris selon la revendication 2, caractérisé par le fait que ladite paroi latérale (52) est faite d'un matériau qui est perméable au liquide réfrigérant, et imperméable aux débris entraînés à l'intérieur.

4. Piège de débris selon l'une quelconque des revendications 1, 2 ou 3, caractérisé par le fait que ledit matériau est un écran de treillis métallique.

5. Piège de débris selon l'une quelconque des revendications 1, 2, 3 ou 4, caractérisé par le fait que les moyens déflecteurs (56) associés à ladite ouverture ou l'ouverture respective (58) sont constitués d'une pièce s'étendant depuis ladite paroi amont (50), vers l'intérieur de la chambre (54) de capture et de retenue de débris, selon un angle aigu par rapport au plan de la paroi amont.

6. Piège de débris selon la revendication 5, caractérisé par le fait que ladite pièce (56) est un élément battant, partiellement séparé de la paroi amont (50), et décalé de son plan de façon à déplacer un bord libre (60) de l'élément battant par rapport aux bords adjacents de la paroi amont, et définir de ce fait ladite ouverture (58) entre les deux bords, le long de plans sensiblement parallèles à la direction du flux réfrigérant à travers l'enceinte creuse (46), ledit élément battant (56) dirigeant les débris à travers ladite ouverture dans une direction transversale par rapport à ladite direction du flux réfrigérant.

7. Piège de débris selon l'une quelconque des revendications précédentes, caractérisé par le fait que ladite enceinte creuse (46) a des dimensions transversales et une forme prévues pour s'ajuster à l'intérieur dudit embout (12) d'extrémité, et présente à cet endroit des moyens (72) de blocage disposés de façon à bloquer de manière démontable le piège de débris en position à l'intérieur de l'embout (12) d'extrémité.

8. Piège de débris selon la revendication 7, caractérisé par le fait que lesdits moyens (72) de blocage comportent des ressorts (72) à lames disposés sur les côtés opposés de ladite enceinte (46), et pouvant venir en contact avec les parties dudit embout (12) d'extrémité lors de la mise en place de l'enceinte en sont intérieur.

9. Piège de débris selon l'une quelconque des revendications précédentes, caractérisé par le fait que ladite enceinte creuse (46) comporte un manchon annulaire central (74) relié aux parois aval et amont (48, 50), et s'étendant entre ces dernières, de façon à augmenter l'intégrité structurelle de l'enceinte creuse.

*Fig. 2*

*Fig. 3*